# EUROPÄISCHE PATENTSCHRIFT

(11) **EP 0 562 369 B1**
(45) Veröffentlichungstag und Bekanntmachung des Hinweises auf die Patenterteilung: **10.09.1997**
(21) Anmeldenummer: 93103882.2
(22) Anmeldetag: 10.03.1993
(51) Int. Cl.: C08G 18/61, C08G 18/71, C08G 77/388, C08G 77/392

(54) **Polysiloxane**
Polysiloxanes
Polysiloxanes

(30) Priorität: 23.03.1992 DE 4209387
(43) Veröffentlichungstag der Anmeldung: 29.09.1993
(73) Patentinhaber: SIEMENS AKTIENGESELLSCHAFT, 80333 München (DE)
(72) Erfinder: von Gentzkow, Wolfgang, Dr. Dipl.-Chem., W-8524 Kleinsendelbach (DE); Feucht, Hans-Dieter, Dr. Dipl.-Chem., W-7253 Renningen 2 (DE); Rampel, Barbara, W-8600 Bamberg (DE)

(56) Entgegenhaltungen:
- EP-A- 0 269 114
- US-A- 3 032 530
- EUROPEAN POLYMER JOURNAL Bd. 24, Nr. 8, 1988, OXFORD GB Seiten 713 - 718 X. COQUERET ET AL. 'FUNCTIONALIZATION OF POLYSILOXANES BY ESTERIFICATION OF PENDANT GLYCIDIC GROUPS: ACETYLATION AS A MODEL REACTION'
- MAKROMOLEKULARE CHEMIE, MACROMOLECULAR CHEMISTRY AND PHYSICS Bd. 190, Nr. 2, Februar 1989, BASEL CH, Seiten 327 - 340 A. HAJAIEJ ET AL. 'Functionalization of polysiloxanes by esterification of pendant epoxy groups: Cross-linkable liquid polymers containing photo-dimerizable ester units'

## Beschreibung

Die Erfindung betrifft epoxyfunktionelle, radikalisch härtbare Polysiloxane sowie deren Herstellung.

Polyorganosiloxane besitzen - aufgrund ihres chemischen Aufbaus - eine Reihe von spezifischen Eigenschaften, wie chemische und thermische Stabilität, UV-Stabilität, Flexibilität, Elastizität, geringe Wasseraufnahme, gute dielektrische Eigenschaften und untoxisches Verhalten. Wegen dieser Eigenschaften und möglicher Eigenschaftskombinationen finden Polyorganosiloxane in vielen Bereichen der Technik Anwendung. Bemerkenswert ist vor allem, daß linearpolymere Polysiloxane bis zu Molmassen von ca. 150 000 flüssig sind und deshalb besonders für den Einsatz in Imprägnier- und Beschichtungssystemen, Klebstoffen, Trennmitteln, Resists, Abdeckmassen, Reflexions- und Schutzschichten sowie für andere spezielle Einsatzzwecke, insbesondere auch in der Medizin und der medizinischen Technik, geeignet sind.

Für die genannten Zwecke werden hochviskose Siloxantypen eingesetzt, die - nach der Formgebung - durch verschiedene Prozesse vernetzt bzw. gehärtet werden; dabei laufen Reaktionen radikalischer oder ionischer Art ab. Insbesondere bei dünnen Schichten hat sich die Photovernetzung als äußerst günstig erwiesen (siehe dazu: "Adhäsion", Bd. 29 (1985), Nr. 10, Seiten 28 bis 35; "Kautschuk + Gummi, Kunststoffe", Bd. 41 (1988), Seiten 1131 bis 1138).

Durch Variation der kettenständigen organischen Reste oder durch Einführung geeigneter funktioneller Gruppen läßt sich das Eigenschaftsspektrum der Polyorganosiloxane gezielt verändern bzw. verschiedenen technischen Anforderungen anpassen. So ist es bekannt, durch Einführung mesogener Gruppen flüssigkristalline Polysiloxane herzustellen ("Mol. Cryst. Liq. Cryst. Inc. Nonlin. Opt.", Vol. 157 (1988), Seiten 193 bis 202; "Polymer", Vol. 29 (1988), Seiten 1318 bis 1322; "Makromol. Chem.", Bd. 188 (1987), Seiten 2759 bis 2767).

Durch Einführung photovernetzbarer Reste, wie Acrylat-, Methacrylat- und Maleinimidreste, können Polysiloxane photovernetzbar oder photostrukturierbar eingestellt werden. Durch Vernetzung derartig modifizierter Polyorganosiloxane werden selektiv transportierende Schichten ("Makromol. Chem., Rapid Commun.", Vol. 9 (1988), Seiten 35 bis 38; "J. Polym. Sci., Part A: Polym. Chem.", Vol. 27 (1989), Seiten 1439 bis 1443) und bioverträgliche Schichten (US-PS 4 822 741) sowie Schichten mit abhäsivem Verhalten (DE-OS 33 16 166, EP-OS 0 281 681 und US-PS 4 576 999) hergestellt.

Zur Einführung von Resten oder Funktionen in Polyorganosiloxane hat sich die Hydrosilylierung, d.h. die Addition von Verbindungen mit endständiger olefinischer Doppelbindung an SiH-Gruppen der Siloxankette, als günstig erwiesen (E.R. Corey, J.Y. Corey and P.P. Gaspar, "Silicon Chemistry", John Wiley & Sons, New York 1988, Seiten 123 bis 132). Radikalisch polymerisierbare Gruppen mit Acrylat- oder Methacrylatresten können mit dieser Methode allerdings nicht direkt eingeführt werden, da die Reaktion nicht selektiv verläuft und beispielsweise die Addition von Allylacrylat sowohl an der Allyl- als auch an der Acrylgruppe erfolgt (R.P. Eckberg in Tagungsbericht "Radcure '84", Seiten 1 bis 17). Die Einführung dieser Gruppen muß deshalb in zwei Schritten erfolgen. Im 1. Schritt wird dabei ein α-Olefin mit einem reaktiven, die Hydrosilylierung nicht störenden Rest, beispielsweise einem Halogen- oder Epoxidrest, addiert. Dieser Rest dient dann zur Einführung der photopolymerisierbaren Gruppe im 2. Schritt.

Besonders einfach durchzuführen ist die Addition einer Epoxidverbindung, beispielsweise von Allylglycidylether, Vinylcyclohexenoxid, Vinylnorbornenoxid oder Limonenoxid, im ersten Schritt und die Addition von Acryl- oder Methacrylsäure bzw. Derivaten davon an den Oxiranring im zweiten Schritt (siehe dazu: DE-OS 30 44 317, DE-OS 33 16 166, EP-OS 0 269 114, EP-OS 0 281 681, US-PS 4 293 678, US-PS 4 331 704 und US-PS 4 576 999). Meistens wird dabei eine vollständige bzw. nahezu vollständige Umsetzung der Epoxidgruppen angestrebt. Nur in einigen Fällen, beispielsweise entsprechend der DE-OS 33 16 166 und der US-PS 4 576 999, wird ein partieller Umsatz beschrieben, d.h. es werden Produkte hergestellt, die neben Acrylatestergruppen auch noch Epoxidgruppen enthalten. Bei der Photovernetzung werden diese Epoxidgruppen dann durch Zugabe von Oniumsalz-Photoinitiatoren aktiviert und in die Vernetzung einbezogen.

Eigene Untersuchungen haben nun ergeben, daß durch Addition von (Meth)acrylsäure und (Meth)acrylaten an epoxyfunktionelle Polysiloxane erhaltene Produkte mit einem Restepoxidanteil von > 50 % sehr instabil sind und bereits beim Aufarbeiten bei der Entfernung des Lösungsmittels oder beim Lagern unter Lichtausschluß gelieren. Als besonders instabil erweisen sich Produkte mit einem sehr niedrigen Anteil an photopolymerisierbaren Gruppen, d.h. < 20 %, und entsprechend hohem Epoxidanteil. Mit abnehmender Epoxidkonzentration werden die Produkte zunehmend stabiler; Restepoxidgehalte von weniger als 20 % beeinträchtigen die Stabilität der Produkte kaum noch. Hinsichtlich einer weiteren Funktionalisierung epoxyfunktioneller photovernetzbarer Polysiloxane sind aber gerade Produkte mit hohem Epoxidgehalt von Interesse.

Aus "Makromol. Chem.", Vol. 190 (1989), Seiten 327 bis 340, ist die Esterifizierung epoxyfunktioneller Polysiloxane mit photodimerisierbaren Carbonsäuren bekannt. Die erhaltenen modifizierten Polysiloxane weisen Epoxidgruppen sowie - bei der Öffnung des Epoxidrings entstandene-sekundäre Hydroxylgruppen auf, die mit Säurechlorid umgesetzt werden.

Aufgabe der Erfindung ist es, leicht zugängliche, lagerstabile und problemlos verarbeitbare radikalisch photovernetzbare Polysiloxane mit möglichst hohem Epoxidgehalt bereitzustellen.

Dies wird durch photovernetzbare Polysiloxane folgender Struktur erreicht: 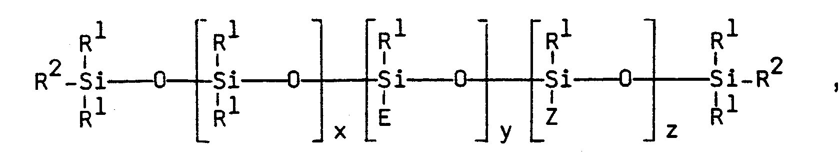 wobei folgendes gilt:
- E =: epoxyfunktioneller Rest mit 4 bis 20 C-Atomen,
- Z =: photopolymerisierbarer Rest mit 8 bis 40 C-Atomen, erhältlich durch Addition einer photopolymerisierbaren Verbindung an einen an der Siloxankette befindlichen Rest E und nachfolgende Addition eines aliphatischen, cycloaliphatischen oder aromatischen Monoisocyanats oder Monoisothiocyanats mit 2 bis 10 C-Atomen an die bei der Öffnung des Epoxidrings entstandene sekundäre OH-Gruppe,
- R¹ =: Alkyl mit 1 bis 4 C-Atomen oder Phenyl,
- R² =: R¹, E oder Z,
wobei die Reste R¹ und R² jeweils gleich oder verschieden sein können,
- x =: 50 bis 1000, y = 10 bis 300, z = 3 bis 8;
x beträgt dabei vorzugsweise etwa das 3- bis 10fache von y. In der Formel sind die einzelnen Baugruppen der Polysiloxane summarisch angegeben; tatsächlich sind diese Gruppen statistisch über die Polymerkette verteilt.

Der epoxyfunktionelle Rest E ist vorzugsweise einer der folgenden Reste:

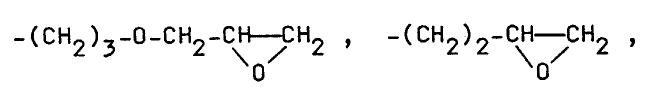

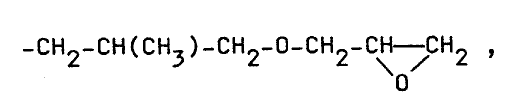

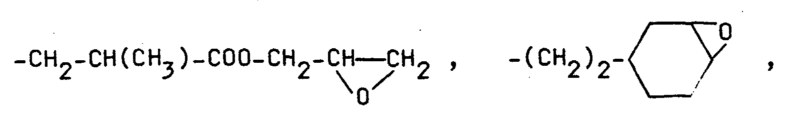

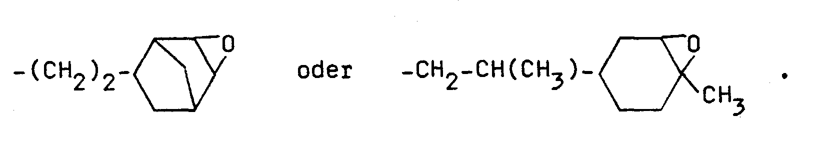

Die epoxyfunktionellen Polysiloxane nach der Erfindung werden in der Weise hergestellt, daß Epoxidgruppen aufweisende Polysiloxane im Molverhältnis < 1, bezogen auf die Epoxidgruppen, mit einer olefinisch ungesättigten, hydroxyl- oder carboxylgruppenhaltigen Verbindung zur Reaktion gebracht werden, und daß an die dabei entstandenen Hydroxylgruppen ein Monoisocyanat oder Monoisothiocyanat angelagert wird.

Die Epoxidgruppen aufweisenden Polysiloxane können durch Addition von Epoxyverbindungen mit ω-ständiger C=C-Doppelbindung an SiH-funktionelle Polysiloxane erhalten werden. Geeignete Epoxyverbindungen sind insbesondere Allylglycidylether, 2-Methyl-allylglycidylether, Epoxybuten, Methacrylsäureglycidylester, Vinylcyclohexenoxid, Vinylnorbornenoxid und Limonenoxid. Die gleichen oder sehr ähnlichen Polysiloxane sind auch durch Epoxidierung von Polysiloxanen mit kettenständigen ω-Alkenyl-, ω-Alkenylether- und ω-Alkenylestergruppen zugänglich.

Olefinisch ungesättigte Verbindungen, die sich für die Umsetzung mit den Epoxidgruppen der in der genannten Weise hergestellten Polysiloxane eignen, sind insbesondere Acrylsäure, Methacrylsäure, Hydroxyethylacrylat, Hydroxyethylmethacrylat, Hydroxyethylmaleinimid, Zimtsäure, Glycerindiacrylat und Glycerindimethacrylat oder Mischungen dieser Verbindungen. Insbesondere Acrylsäure und Methacrylsäure können auch im Gemisch mit den entsprechenden Anhydriden zum Einsatz gelangen.

Die erfindungsgemäßen Verbindungen werden durch Umsetzung der bei der Addition der olefinisch ungesättigten Verbindungen an die Epoxidgruppen aufweisenden Polysiloxane gebildeten Produkte mit Monoisocyanat oder Monoisothiocyanat erhalten. Bei dieser Umsetzung reagieren die Iso(thio)cyanate mit der vicinalen Hydroxylgruppe, die durch Öffnung des Oxiranrings bei der vorhergehenden Additionsreaktion entstanden ist. Als Monoisocyanat dient dabei vorzugsweise Propylisocyanat. Weitere mögliche Verbindungen sind beispielsweise Butylisocyanat und Phenylisocyanat sowie Propylisothiocyanat und Phenylisothiocyanat.

Anhand von Ausführungsbeispielen soll die Erfindung noch näher erläutert werden.

### Beispiele 1 bis 5

Synthese von Epoxidgruppen enthaltenden Polysiloxanen (Polyepoxysiloxane) als Ausgangsverbindungen für die Herstellung der erfindungsgemäßen photovernetzbaren, epoxyfunktionellen Polysiloxane:

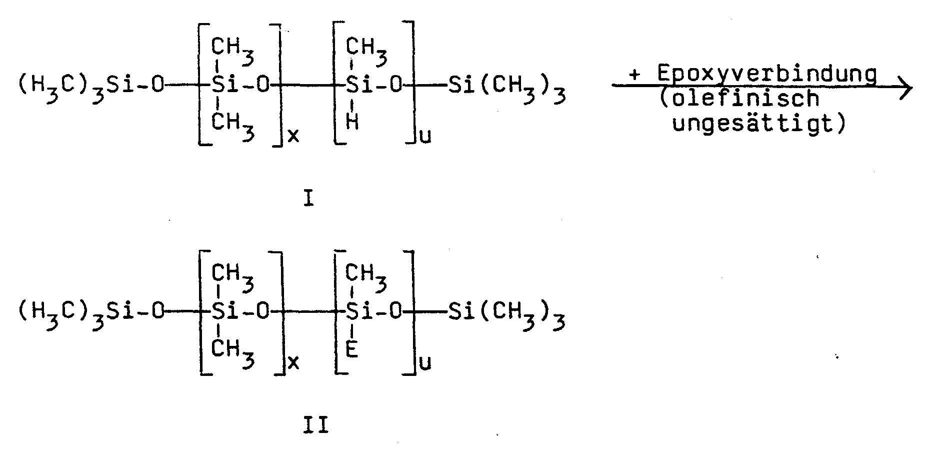

Die in Tabelle I angegebenen Masseteile Octamethylcyclotetrasiloxan (OMCTS), SiH-funktionelles Polymethylsiloxan mit einer

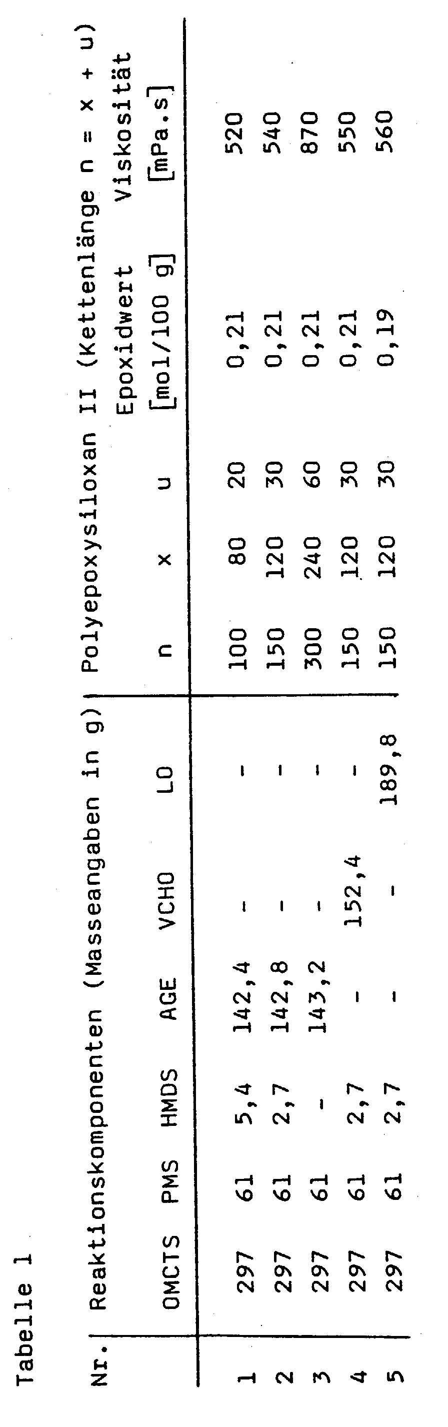

Kettenlänge von n = 60 (PMS) und Hexamethyldisiloxan (HMDS) werden mit 0,2 g Trifluormethansulfonsäure und 13 Tropfen destilliertem Wasser versetzt und 40 h bei 70°C gerührt. Nach dem Abkühlen wird die Reaktionsmischung mit ca. 1 g Na₂CO₃ versetzt, 2 h gerührt und über ein Membranfilter mit 1,2 µm Porendurchmesser unter Druck filtriert. Flüchtige Bestandteile werden zuerst bei 100°C/0,1 mbar und danach im Dünnschichtverdampfer bei 120°C/0,1 mbar entfernt.

Die erhaltene farblose Flüssigkeit wird bei 70°C innerhalb von 6 bis 7 h zu einer Lösung der in Tabelle 1 angegebenen Menge frisch destillierten Epoxids, d.h. Allylglycidylether (AGE), Vinylcyclohexenoxid (VCHO) oder Limonenoxid (LO), 0,13 g H₂PtCl₆.6 H₂O und 0,5 ml tert.-Butanol in 250 ml Toluol getropft. Die Reaktionsmischung wird dann solange bei 70°C gerührt, bis ein Mindestumsatz von 95 % erreicht ist (Kontrolle durch volumetrische SiH-Bestimmung). Zur Entfernung des Katalysators werden 0,2 g vernetztes Poly-4-vinylpyridin zugegeben, dann wird 2 h bei Raumtemperatur gerührt und unter Druck über ein Membranfilter mit 1,2 µm Porendurchmesser filtriert. Das Lösungsmittel sowie flüchtige Bestandteile werden im Vakuum bei 70°C/0,1 mbar entfernt. Es werden farblose Flüssigkeiten in nahezu quantitativer Ausbeute erhalten. Tabelle 1 enthält die zur Charakterisierung der Produkte bestimmten Epoxidwerte und Viskositäten.

### Beispiele 6 bis 8

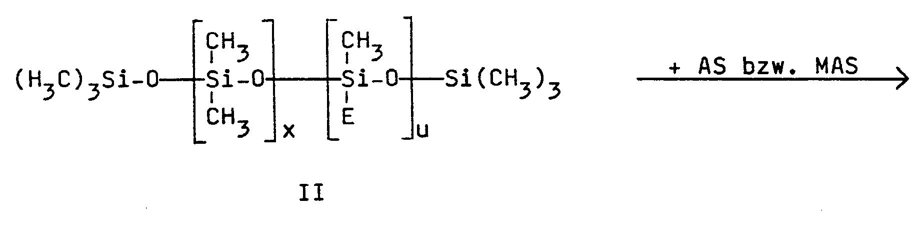

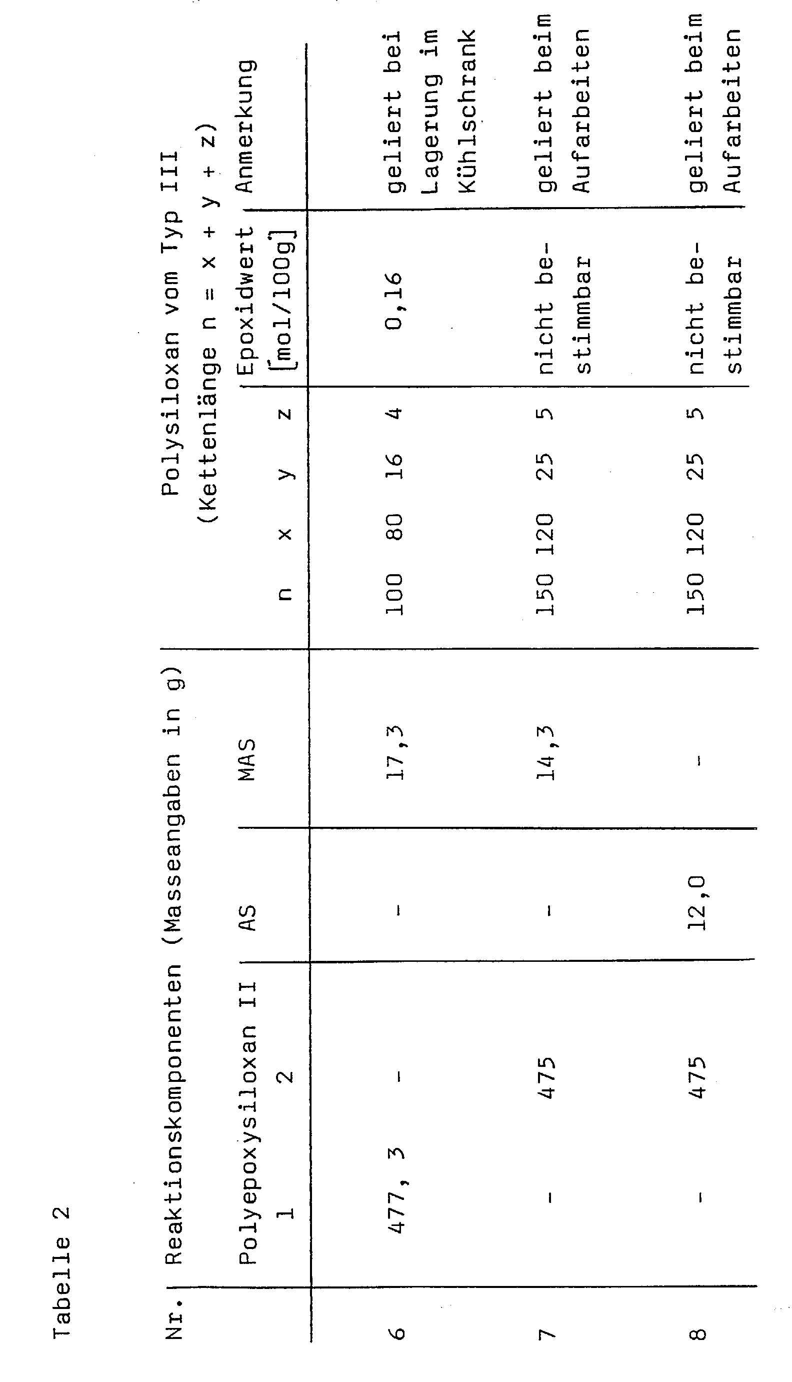

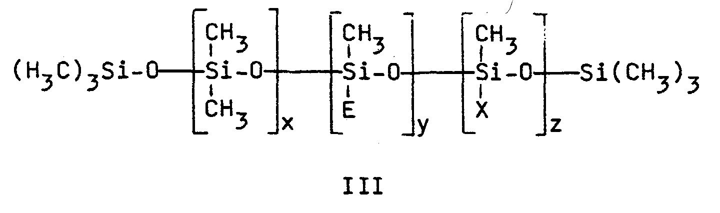

Die in Tabelle 2 angegebenen Masseteile der Produkte 1 und 2 werden unter Gelblicht mit den ebenfalls in Tabelle 2 angegebenen Masseteilen Acrylsäure (AS) bzw. Methacrylsäure (MAS) zusammen mit 2,5 g Diethylphosphit als Stabilisator und 2,5 g N,N,N',N'-Tetramethyl-4,4'-diaminodiphenylmethan als Katalysator in 500 ml wasserfreiem Toluol gelöst, dann wird 10 bis 11 h bei 50°C gerührt. Nach dem Abkühlen wird die Reaktionsmischung zum Entfernen des Katalysators mit saurem Al₂O₃ versetzt, 2 h gerührt und über ein Membranfilter mit 1,2 µm Porendurchmesser druckfiltriert. Das Lösungsmittel und flüchtige Bestandteile werden bei Raumtemperatur im Vakuum (0,1 mbar) entfernt. Die erhaltenen Produkte sind unbeständig und gelieren bereits beim Aufarbeiten oder beim Lagern im Kühlschrank.

### Beispiele 9 bis 16

Herstellung der erfindungsgemäßen epoxyfunktionellen, photovernetzbaren Polysiloxane:

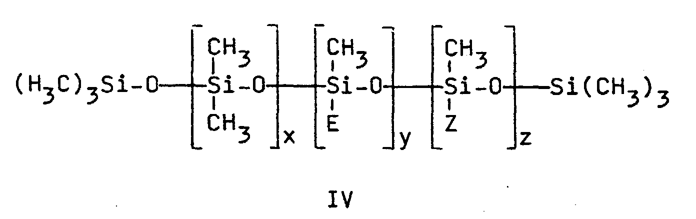

Die in Tabelle 3 angegebenen Masseteile der Produkte 1 bis 5 werden, wie in den Beispielen 6 bis 8 beschrieben, mit Acryl- bzw. Methacrylsäure, 2,5 g Diethylphosphit und 2,5 g N,N,N',N'-Tetramethyl-4,4'-diaminodiphenylmethan in Toluol umgesetzt.

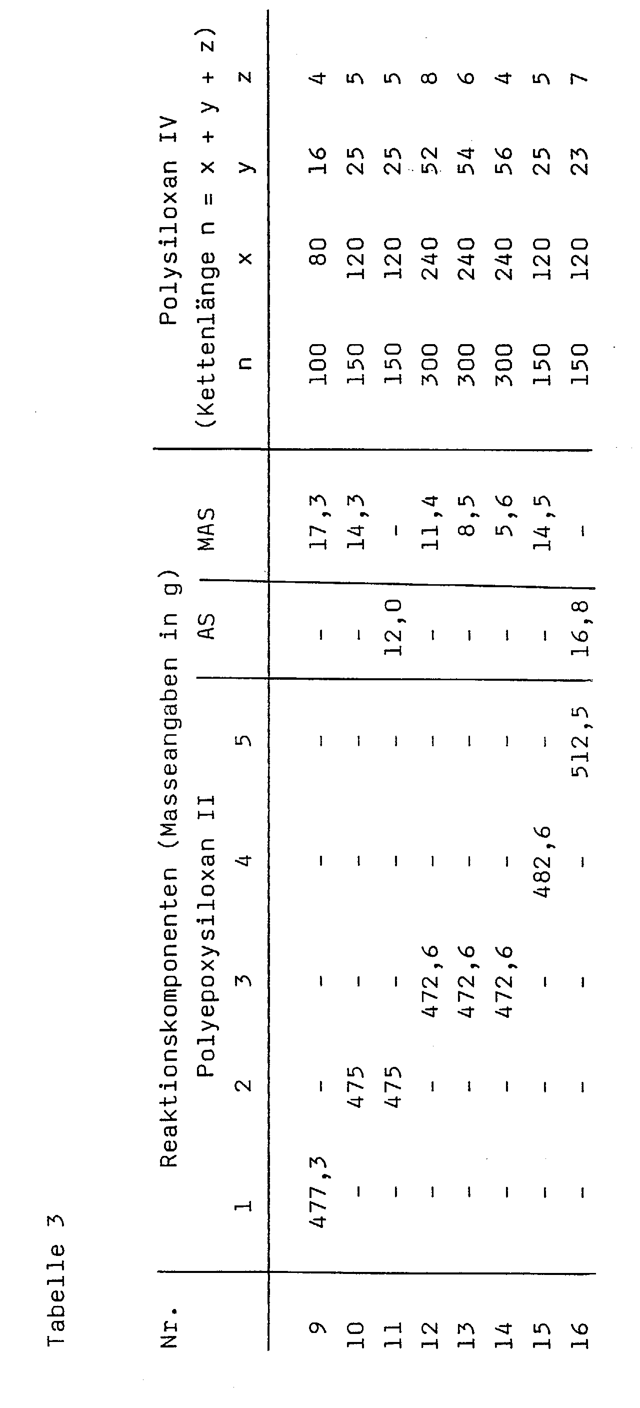

Die vom Katalysaor befreite Lösung wird aber nicht eingeengt, sondern mit 14,2 g Propylisocyanat und 20 Tropfen Dibutylzinndilaurat versetzt und 120 h bei Raumtemperatur gerührt. Danach wird überschüssiges Isocyanat durch Zugabe weniger Tropfen Methanol inaktiviert, und dann werden das Lösungsmittel sowie flüchtige Bestandteile bei Raumtemperatur im Vakuum (ca. 0,1 mbar) entfernt. Es werden farblose klare Flüssigkeiten in Ausbeuten zwischen 90 und 100 % erhalten. Weitere Angaben zu den erhaltenen Produkten (Epoxidwert, Acrylatgehalt, Viskosität) sind in Tabelle 4 zusammengefaßt.

Die Produkte müssen im Kühlschrank aufbewahrt werden. Die Beurteilung der Lagerstabilität durch wöchentliche Bestimmung der Viskosität, die maximal um 5 % zunehmen darf, ergibt Werte von > 3 Monaten.

**Tabelle 4**

| Nr. | Photovernetzbares Polysiloxan IV | | |
|---|---|---|---|
| | Epoxid [mol/100g] | Acrylat [mol/100g] | Viskosität [mPa.s] |
| 9 | 0,16 | 0,04 | 2200 |
| 10 | 0,17 | 0,03 | 2400 |
| 11 | 0,17 | 0,03 | 2380 |
| 12 | 0,18 | 0,03 | 3000 |
| 13 | 0,19 | 0,02 | 2850 |
| 14 | 0,20 | 0,01 | 2800 |
| 15 | 0,16 | 0,03 | 2400 |
| 16 | 0,14 | 0,04 | 2500 |

## Patentansprüche

1. Epoxyfunktionelle Polysiloxane der Struktur: 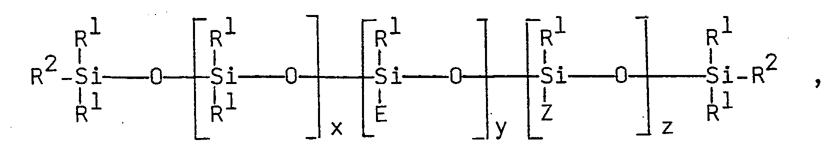 wobei folgendes gilt:
E = epoxyfunktioneller Rest mit 4 bis 20 C-Atomen,
Z = photopolymerisierbarer Rest mit 8 bis 40 C-Atomen, erhältlich durch Addition einer photopolymerisierbaren Verbindung in Form einer olefinisch ungesättigten, hydroxyl- oder carboxylgruppenhaltigen Verbindung an einen an der Siloxankette befindlichen Rest E und nachfolgende Addition eines aliphatischen, cycloaliphatischen oder aromatischen Monoisocyanats oder Monoisothiocyanats mit 2 bis 10 C-Atomen an die bei der Öffnung des Epoxidrings entstandene sekundäre OH-Gruppe,
R¹ = Alkyl mit 1 bis 4 C-Atomen oder Phenyl,
R² = R¹, E oder Z,
x = 50 bis 1000, y = 10 bis 300, z = 3 bis 8.

2. Epoxyfunktionelle Siloxane nach Anspruch 1, **dadurch gekennzeichnet,** daß für den Rest E folgendes gilt:

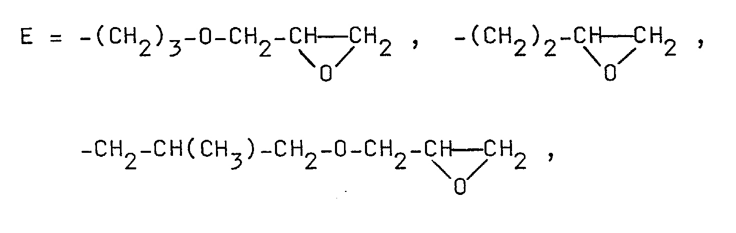

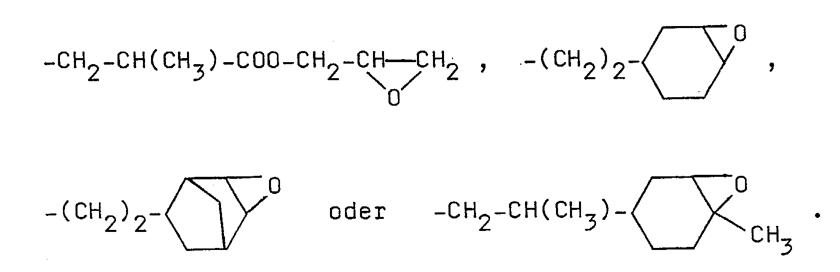

3. Verfahren zur Herstellung epoxyfunktioneller Polysiloxane nach Anspruch 1 oder 2, **dadurch gekennzeichnet,** daß Epoxidgruppen aufweisende Polysiloxane im Molverhältnis < 1, bezogen auf die Epoxidgruppen, mit einer olefinisch ungesättigten, hydroxyl- oder carboxylgruppenhaltigen Verbindung zur Reaktion gebracht werden, und daß an die dabei entstandenen Hydroxylgruppen ein Monoisocyanat oder Monoisothiocyanat angelagert wird.

4. Verfahren nach Anspruch 3, **dadurch gekennzeichnet,** daß als olefinisch ungesättigte Verbindung Acrylsäure, Methacrylsäure, Hydroxyethylacrylat, Hydroxyethylmethacrylat, Hydroxyethylmaleinimid, Zimtsäure, Glycerindiacrylat, Glycerindimethacrylat oder eine Mischung aus zwei oder mehreren dieser Verbindungen verwendet wird.

5. Verfahren nach Anspruch 3 oder 4, **dadurch gekennzeichnet,** daß als Monoisocyanat Propylisocyanat verwendet wird.

## Claims

1. Epoxy-functional polysiloxanes of the structure: 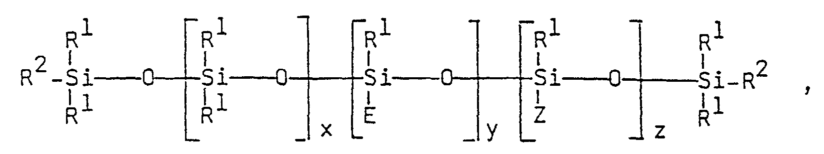 where the following applies:
E = epoxy-functional residue having 4 to 20 C atoms,
Z = photopolymerizable residue having 8 to 40 C atoms, which residue is obtainable by addition of a photopolymerizable compound in the form of an olefinically unsaturated compound containing hydroxyl groups or carboxyl groups to a residue E located at the siloxane chain and subsequent addition of an aliphatic, cycloaliphatic or aromatic monoisocyanate or monoisothiocyanate having 2 to 10 C atoms to the secondary OH group which formed when the epoxide ring was opened,
R¹ = alkyl having 1 to 4 C atoms or phenyl,
R² = R¹, E or Z,
x = 50 to 1000, y = 10 to 300, z = 3 to 8.

2. Epoxy-functional siloxanes according to claim 1, characterised in that for the residue E, the following applies:

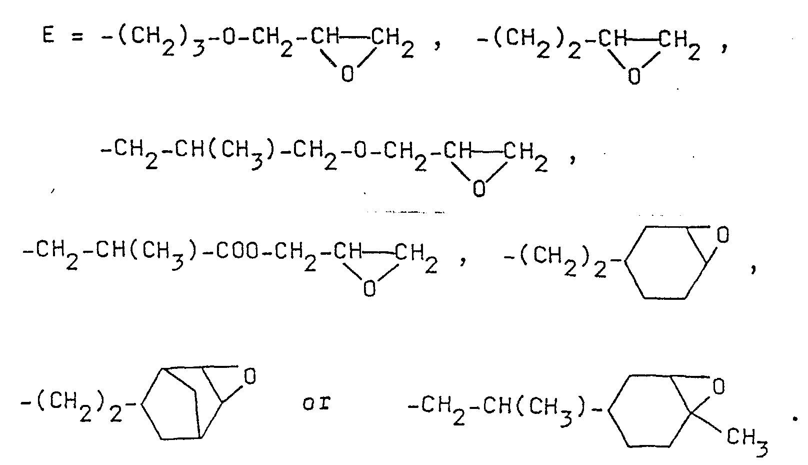

3. Method for the preparation of epoxy-functional polysiloxanes according to claim 1 or 2, characterised in that polysiloxanes having epoxide groups are reacted in a molar ratio of < 1, with respect to the epoxide groups, with an olefinically unsaturated compound containing hydroxyl groups or carboxyl groups, and in that a monoisocyanate or monoisothiocyanate is added to the hydroxyl groups formed in this way.

4. Method according to claim 3, characterised in that as an olefinically unsaturated compound, acrylic acid, methacrylic acid, hydroxyethyl acrylate, hydroxyethyl methacrylate, hydroxyethyl maleinimide, cinnamic acid, glycerol diacrylate and glycerol dimethacrylate or a mixture of two or more of these compounds is used.

5. Method according to claim 3 or 4, characterised in that propylisocyanate is used as a monoisocyanate.

## Revendications

1. Polysiloxanes à fonctionnalité époxy répondant à la structure: 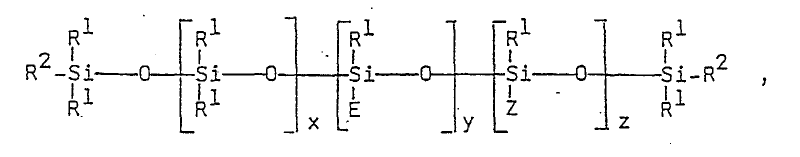 dans laquelle:
E représente un radical à fonctionnalité époxy contenant de 4 à 20 atomes de carbone,
Z représente un radical apte à une photopolymérisation, contenant de 8 à 40 atomes de carbone, que l'on obtient par addition d'un composé apte à une photopolymérisation sous forme d'un composé à insaturation oléfinique contenant des groupes hydroxyle ou carboxyle à un radical E se trouvant sur la chaîne siloxane et par addition ultérieure d'un monoisocyanate ou d'un monoisothiocyanate aliphatique, cycloaliphatique ou aromatique contenant de 2 à 10 atomes de carbone au groupe OH secondaire obtenu lors de l'ouverture du noyau époxyde,
R¹ représente un groupe alkyle contenant de 1 à 4 atomes de carbone ou encore un groupe phényle,
R² représente R¹, E ou Z,
x est égal à 50-1000, y = 10-300, z = 3-8.

2. Siloxanes à fonctionnalité époxy selon la revendication 1, caractérisés en ce que le radical E représente ce qui suit:

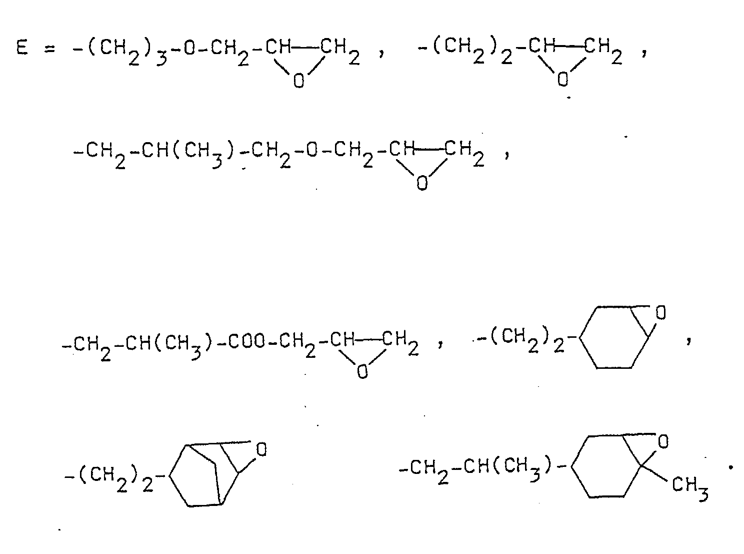

3. Procédé pour la préparation de polysiloxanes à fonctionnalité époxy selon la revendication 1 ou 2, caractérisé en ce qu'on amène à réagir des polysiloxanes présentant des groupes époxydes dans un rapport molaire < 1, rapporté aux groupes époxydes, avec un composé à insaturation oléfinique contenant des groupes hydroxyle ou carboxyle, et en ce qu'on fixe par addition aux groupes hydroxyle obtenus en l'occurrence, un monoisocyanate ou un monoisothiocyanate.

4. Procédé selon la revendication 3, caractérisé en ce qu'on utilise, comme composé à insaturation oléfinique, l'acide acrylique, l'acide méthacrylique, l'acrylate d'hydroxyéthyle, le méthacrylate d'hydroxyéthyle, le maléimide d'hydroxyéthyle, l'acide cinnamique, le diacrylate de glycérol, le diméthacrylate de glycérol ou encore un mélange de deux de ces composés ou plus.

5. Procédé selon la revendication 3 ou 4, caractérisé en ce qu'on utilise, comme monoisocyanate, l'isocyanate de propyle.
